# FASCICULE DE BREVET EUROPEEN

(11) **EP 0 715 465 B1**
(45) Date de publication et mention de la délivrance du brevet: **15.09.1999**
(21) Numéro de dépôt: 95402460.0
(22) Date de dépôt: 03.11.1995
(51) Int. Cl.: H04N 7/10, H04N 5/765

(54) **Procédé de détection de connexions de type Péritel dans un réseau domestique**
Verfahren zur Auffindung von Peritel-Anschlüssen in einem Hausnetz
Method of detection of peritel connections in a domestic network

(30) Priorité: 04.11.1994 FR 9413236
(43) Date de publication de la demande: 05.06.1996
(73) Titulaire: THOMSON multimedia, 92648 Boulogne Cédex (FR)
(72) Inventeur: Diehl, Eric,c/o Thomson Multimedia, 92050 Paris la Defense (FR); Bürklin, Helmut,c/o Thomson Multimedia, 92050 Paris la Defense (FR); Kouba, Riad,c/o Thomson Multimedia, 92050 Paris la Defense (FR); Saucy, Pascal,c/o Thomson Multimedia, 92050 Paris la Defense (FR)
(74) Mandataire: Ruellan-Lemonnier, Brigitte

(56) Documents cités:
- EP-A- 0 409 702
- EP-A- 0 497 073
- US-A- 4 947 244

## Description

L'invention concerne un procédé de détection de connexions de type Péritel entre differents appareils dans un réseau domotique. L'invention s'applique dans le domaine de la domotique.

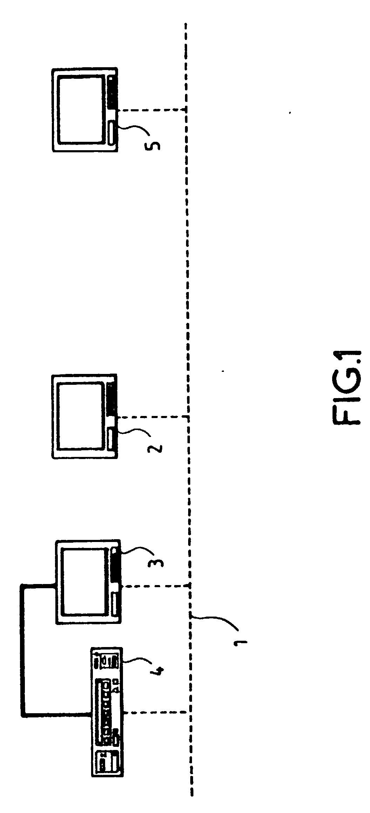

La figure 1 illustre le problème posé. Un bus domotique 1 relie différents appareils ou organes, tels que des téléviseurs 2 et 3 et un magnétoscope 4. Le téléviseur 3 et le magnétoscope 4 sont d'autre part reliés par une prise Péritel (ou prise "SCART" pour Syndicat des Constructeurs d'Appareils Radio-récepteurs et Télévision). La prise Péritel est décrite dans la norme européenne EN 50 049. Un réseau de distribution de signaux vidéo est décrit dans le document EP-A-0 409 702.

Le réseau domotique comprend également une unité de contrôle centrale 5. Cette unité de contrôle a la possibilité de contrôler certaines fonctions des appareils reliés au réseau. La connexion par l'intermédiaire de la liaison Péritel n'est pas forcément directement contrôlable par cette unité centrale.

Certains appareils réagissent, lorsqu'ils sont en mode "Veille", à la présence d'un signal sur certaines broches des prises Péritel auxquelles elles sont connectées. Ils s'agit par exemple de la broche 8. Le téléviseur 3 peut détecter la présence d'une émission en provenance du magnétoscope 4 en surveillant l'état de cette broche. Lorsque cette broche présente un signal actif, le téléviseur 3 se met automatiquement en mode "Marche" et sélectionne la prise Péritel active comme source vidéo. Cette détection automatique permet entre autres de ne manipuler que le magnétoscope pour visualiser une cassette. Il suffit d'allumer ce magnétoscope et de procéder à la lecture de la cassette: le téléviseur s'allume automatiquement pour permettre la visualisation.

Dans un réseau domotique, il peut être possible que les signaux vidéo provenant d'une source vidéo telle que le magnétoscope 4 soient visualisés sur un téléviseur autre que le téléviseur 3. Les signaux vidéo sont alors transmis à travers un canal du réseau vers une unité de visualisation telle que le téléviseur 2, situé par exemple dans une autre salle que les appareils 3 et 4. Cette transmission est contrôlée par l'unité centrale 5. Le support physique de transmission est par exemple constitué par des cables coaxiaux et/ou des liaisons en fréquences radio.

Or, une émission de signaux vidéo en provenance du magnétoscope 4 a pour effet d'allumer intempestivement le téléviseur 3 à travers la prise Péritel, alors que l'utilisateur se trouve dans une autre salle.

L'invention a pour objet un procédé de détection de connexions de type Péritel dans un réseau domotique caractérisé en ce qu'il comporte les étapes:
a) de désactiver les sources vidéo reliées au réseau,
b) de mettre en veille les récepteurs vidéo reliés au réseau,
c) de commander l'émission d'un signal vidéo d'une première source vidéo,
d) de détecter les récepteurs vidéo allumés,
e) de mémoriser l'existence d'une connexion entre ladite première source et lesdits récepteurs vidéo allumés,
f) de désactiver ladite première source et de remettre en veille lesdits récepteurs vidéo allumés,
g) de reprendre le procédé à partir de l'étape c avec chacune des sources restantes.

Par connexion de type Péritel, on entend une connexion entre au moins deux appareils qui cause la mise en fonctionnement d'au moins un desdits appareils dit récepteur lors de l'émission d'un signal par un desdits appareils dit source sur ladite connexion.

Selon un mode d'utilisation particulier, ledit procédé est mis en oeuvre lors de l'installation d'une nouvelle source vidéo ou d'un nouveau récepteur vidéo dans le réseau.

Selon un mode d'utilisation particulier, ledit procédé, il est mis en oeuvre sur l'initiative d'un utilisateur.

Selon un mode d'utilisation particulier, la mémorisation des connexions est utilisée pour désactiver des récepteurs vidéo mis en fonctionnement de façon indésirable lors de la mise en fonctionnement d'une source vidéo pour laquelle il existe de telles connexions.

L'invention a aussi pour objet un procédé de détection de connexions de type Péritel dans un réseau domotique caractérisé en ce qu'il comporte les étapes:
a) de désactiver les sources vidéo reliées au réseau,
b) de mettre en veille les récepteurs vidéo reliés au réseau,
c) de commander l'émission d'un signal vidéo d'un groupe de sources vidéo,
d) de détecter si aucun récepteur vidéo n'est allumé, et dans ce cas, de désactiver les sources vidéo dudit groupe et de reprendre l'étape c avec le groupe suivant de sources vidéo,
e) dans le cas où au moins un récepteur vidéo allumé est détecté, procéder à la détection de connexions pour ce groupe de sources vidéo selon le procédé précédemment défini, ledit groupe étant considéré comme constituant l'ensemble des sources vidéo du réseau pour l'application dudit procédé,
f) de reprendre l'étape c avec le groupe suivant de sources vidéo.

Cette répartition en groupes de sources vidéo permet de traiter un grand nombre de sources en même temps, ce qui est particulièrement souhaitable lorsque le réseau ne comporte que peu de connexions de type Péritel.

L'invention a aussi pour objet un procédé de détection de connexions de type Péritel dans un réseau domotique caractérisé en ce qu'il comporte les étapes:
a) de mettre en veille les récepteurs vidéo reliés au réseau,
b) de commander l'émission de signaux vidéo à partir de toutes les sources vidéo du réseau
c) de détecter si des récepteurs vidéo sont allumés,
d) dans la négative, de conclure à l'inexistence desdites connexions,
e) dans l'affirmative, de répartir les sources vidéo du réseau en au moins deux groupes, et de procéder aux étapes suivantes:
f) de mettre en veille les récepteurs vidéo reliés au réseau,
g) pour chaque groupe, de commander l'émission d'un signal vidéo à partir des sources dudit groupe,
h) de détecter si des récepteurs vidéo sont allumés,
i) dans la négative, de conclure à l'inexistence desdites connexions,
j) dans l'affirmative, de procéder à une séparation en sous-groupes desdites sources appartenant audit groupe,
k) de reprendre les étapes f à j pour chaque groupe, sous-groupe ou ensemble plus petit jusqu'à ce que les ensembles formés contiennent un nombre limite de sources vidéo.

Il s'agit là d'un procédé de détection pyramidal: les ensembles de sources sur lesquels on agit en même temps sont de plus en plus petits, jusqu'à atteindre une taille limite.

Selon un mode d'utilisation particulier, ledit nombre limite étant strictement supérieur à 1, le procédé conforme à l'un des points précédents est mis en oeuvre pour détecter lesdites connexions, ledit ensemble contenant ledit nombre limite de sources vidéo étant considéré comme constituant l'ensemble des sources vidéo du réseau pour l'application dudit procédé.

Selon un mode d'utilisation particulier, ledit nombre limite étant de un, l'étape h comportant une étape de mémorisation de l'existence d'une connexion entre ladite source vidéo dudit ensemble et lesdits récepteurs vidéo allumés.

Suivant ce dernier mode particulier, le procédé pyramidal est poursuivi jusqu'à ce que les ensembles soient réduits à une seule source vidéo. L'identification d'une connexion est alors immédiate.

D'autres caractéristiques et avantages de l'invention apparaîtront à travers la description d'un exemple de mise en oeuvre particulier non limitatif illustré par les figures parmi lesquelles:
- la figure 1, déjà décrite, représente schématiquement un réseau domotique,
- la figure 2 représente schématiquement un réseau domotique de manière plus détaillée,
- la figure 3 représente un organigramme du procédé conforme à l'invention.

Les mêmes éléments sur les figures portent les mêmes références.

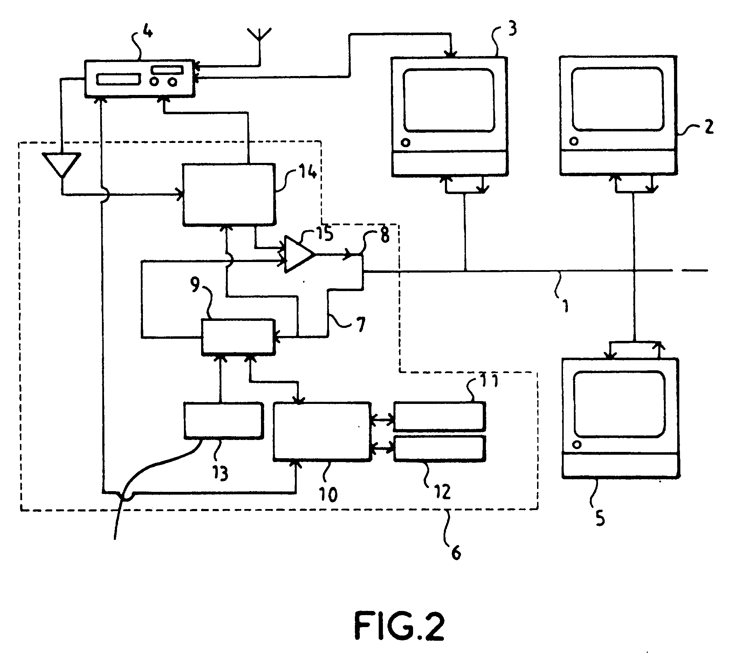

La figure 2 reprend de manière plus détaillée certains éléments du réseau domotique de la figure 1. Le bus de transmission 1 connecte les appareils 2, 3 et 4. Le cadre en pointillé 6 représente l'interface entre le bus 1 et le magnétoscope 4. Pour préserver la clarté des schémas, seul une interface a été représentée. Il est bien évident que des interfaces similaires sont utilisées pour raccorder les autres appareils du réseau.

Le réseau illustré est un réseau en conformité avec la spécification "Home Systems Specification" édité par la European Home Systems Association (EHSA), 15/24 mars 1992.

Selon le présent exemple de réalisation, le bus 1 est constitué par un câble coaxial double tel que spécifié dans la partie "Home Systems Specification Coaxial Cable" du document EHSA. Conceptuellement, on définit un flux de données amont et un flux de données aval, représentant respectivement le flux d'entrée large bande et le flux de sortie large bande d'un des appareils illustrés. Le spectre large bande va de 0 Hz à 860 MHz, la composante continue étant réservée à un alimentation en tension continue de 15 Volts, la bande de fréquence jusqu'à 1 Mhz étant réservée à la transmission de données de service ("Datagrams"), tandis que la bande allant de 40 Mhz à 860 MHz est réservée à la transmission de signaux vidéo et de données à grand débit.

Les flux amont et aval sont symbolisés sur la figure 2 par respectivement la ligne 7 et la ligne 8. Le flux amont est filtré par un filtre bande de base 9, pour extraire les données de service, transmises à un microprocesseur 10. Ce dernier est relié à une mémoire vive 11 et à une mémoire morte 12. La mémoire vive 11 permet au microprocesseur de stocker des informations en provenance d'autres appareils du réseau, notamment des ordres en provenance d'une unité centrale 5.

Le microprocesseur est également relié à une mémoire morte 12, qui contient entre autres les routines d'analyse et de traitement des données de service. Le microprocesseur commande de façon appropriée les fonctions du magnétoscope. Le filtre 9 est également connecté à une alimentation en courant continu 13.

Le flux amont est d'autre part transmis à une unité d'allocation de canaux 14. Cette unité est connectée au magnétoscope 4 aussi bien en entrée qu'en sortie. Elle effectue notamment la transposition bande de base - canal de transmission et inversément. Le signal sortant de l'unité 14 est combiné avec les données de service en provenance du filtre 9 au niveau d'un sommateur amplificateur 15, fournissant ainsi le flux aval.

Suivant le présent exemple de réalisation, l'unité centrale est intégrée dans un récepteur de télévision, mais elle peut être intégrée dans un autre type d'appareil ou être raccordée de façon indépendante au réseau. L'écran de ce récepteur est utilisé pour afficher des menus interactifs permettant à l'utilisateur d'agir sur le fonctionnement du réseau.

L'unité centrale a notamment la possibilité d'effectuer les actions suivantes: -vérifier si un appareil est allumé ou en veille,
- allumer ou éteindre/mettre en veille un appareil
- activer une source d'émission vidéo.

L'unité centrale possède d'autre part une liste des appareils connectés au réseau. Cette liste est mise à jour régulièrement pour tenir compte des appareils nouvellement connectés ou déconnectés. La procédure d'enregistrement ("Enrolment") et d'attribution d'adresses d'un appareil est décrite de manière plus détaillée dans la section "Network Management" du document EHSA dont la référence a déjà été donnée. Une telle procédure ne fait pas l'objet de la présente demande.

Le type des appareils du réseau est identifié par un descripteur. Parmi les sources vidéo on peut citer: un magnétoscope en tant que source (descripteur 2502), un modulateur vidéo, une caméra vidéo (3D01)...

Parmi les récepteurs: Une imprimante vidéo (0501), un magnétoscope en tant qu'enregistreur (2501), un tuner vidéo ...

Il faut noter que selon l'exemple illustré, l'interface entre le magnétoscope 4 et le bus 1 est représenté comme étant externe au magnétoscope, ceci pour des raisons de clarté. Il est bien évident que cette interface peut être intégrée au magnétoscope ou à un autre appareil, ce qui a pour avantage notamment de permettre l'utilisation de circuits internes du magnétoscope, tels qu'un microprocesseur ou un microcontrôleur.

Quand une source vidéo émet un signal sur une prise Péritel, le connecteur 8 de cette prise porte une tension continue de 12V.

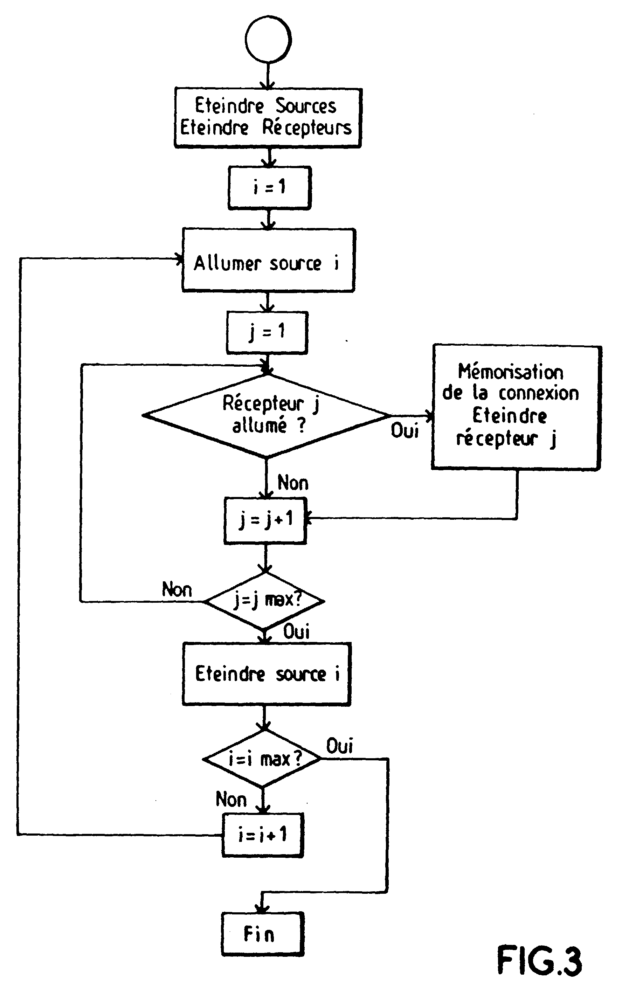

La figure 3 représente un organigramme de l'exemple particulier du procédé conforme à l'invention.

Dans un premier temps, l'unité centrale met en mode veille l'ensemble des sources vidéo, ainsi que l'ensemble des récepteurs vidéo.

Le cas de chaque source sera traité indépendamment. L'unité centrale commande l'allumage de la première source vidéo, puis active l'émission d'un signal vidéo à partir de cette source. Selon le présent exemple, cette source est un magnétoscope dont on supposera qu'il est muni d'une cassette. Bien sûr, on pourra aussi mettre en oeuvre un éventuel modulateur intégré du magnétoscope pour fournir un signal vidéo.

L'unité centrale passe alors en revue l'état de l'ensemble des récepteurs vidéo. Si un récepteur est allumé, alors une connexion Péritel existe entre ce récepteur et la source vidéo.

La source vidéo, ainsi que d'éventuels récepteurs allumés, sont alors respectivement désactivés ou remis en veille. Le procédé est repris pour la source vidéo suivante.

La notation prise pour l'organigramme numérote les sources de 1 à imax et les récepteurs de 1 à jmax. Si l'une des deux valeurs imax ou jmax est nulle, l'algorithme n'est pas mis en oeuvre, aucune connexion du type recerché n'existant dans le réseau.

Le réseau illustré sur la figure 2 donne lieu à l'échange de commandes ci-dessous lors de l'application du procédé conforme présent exemple. On suppose que le magnétoscope 4 est la seule source vidéo du réseau, les récepteurs étant les téléviseurs 2 et 3. Le magnétoscope 4 peut aussi être considéré comme un récepteur. Cependant, s'agissant de la seule source, son état ne sera pas testé dans le présent exemple. L'unité centrale 5 est nommé UC, les téléviseurs 2 et 3 respectivement TV1 et TV2 et le magnétoscope VCR.

| **De** | **A** | **Commandes** | **Commentaires** |
|---|---|---|---|
| UC | TV1 | POWER, write, standby | Mise en veille de TV1 |
| UC | TV2 | POWER, write, standby | Mise en veille de TV2 |
| UC | VCR | POWER, write, standby | Mise en veille du VCR |
| UC | VCR | MODE, write, play | VCR est allumé et mis en mode reproduction |
| UC | TV1 | POWER, read-request | Lecture de l'état de TV1 par UC |
| TV1 | UC | POWER, read-response, stanby | TV1 renvoie son état à UC. UC en déduit qu'il n'y a pas de connexion Péritel entre VCR et TV1 |
| UC | TV2 | POWER, read-request | Lecture de l'état de TV2 par UC |
| TV2 | UC | POWER, read-response, ON | TV2 revoie son état à UC, qui en déduit l'existence d'une connexion Péritel ents VCR et TV2 |
| UC | TV2 | POWER, write, standby | Remettre TV2 en mode veille |
| UC | VCR | POWER, write, standby | Remettre VCR en mode veille |

Une fois le procédé appliqué, l'unité centrale possède une carte complète des connexions Péritel dans le réseau. il s'agit bien évidemment des connexions Péritel induisant un allumage d'un appareil. Lorsque l'unité centrale mettra en oeuvre une source donnée, elle pourra ainsi envoyer des ordres adéquats aux appareils connectés à cette source.

Si un appareil ne réagit pas à la présence d'une tension sur la broche 8 du connecteur Péritel, aucune connexion ne sera détectée. Dans la mesure où ce type d'appareil ne subira pas de mise en fonctionnement intempestive, cette non-détection n'a pas de conséquences indésirables.

Selon une variante de réalisation, le procédé conforme à l'invention est mis en oeuvre lors de l'installation d'une nouvelle source vidéo ou d'un nouveau récepteur dans le réseau. Le procédé n'est mis en oeuvre que lorsque le type d'appareil est tel qu'il peut éventuellement induire une nouvelle connexion de prise Péritel.

Selon une variante de réalisation, le procédé est mis en oeuvre sur initiative de l'utilisateur.

Selon une variante de réalisation, l'ensemble des sources vidéo est réparti en plusieurs groupes. Au lieu d'allumer une seule source à la fois, un groupe entier de sources est mis en marche en même temps. Si aucun récepteur n'est allumé, aucune connexion Péritel existe pour ce groupe de sources. Si au moins un récepteur est allumé, les sources de ce groupe sont traitées indépendamment pour déterminer les connexions existantes. Cette variante permet de traiter plus rapidement un grand nombre d'appareils.

Selon une variante de réalisation, une recherche pyramidale des connexions de type Péritel est effectuée. En un premier temps, toutes les sources vidéo du réseau sont activées. Si aucun récepteur n'est allumé, alors aucune connexion n'est détectée. Dans le cas contraire, les sources vidéo sont réparties en au moins deux groupes de sources. Pour chaque groupe de sources, la même opération est recommencée: activation de l'ensemble des sources du groupe, puis séparation éventuelle en sous-groupes. Cette division peut être poursuivie jusqu'au niveau des sources individuelles, ou s'arrêter quand un groupe contient un nombre limite de sources, qui seront traitées une à une.

Selon une variante de réalisation, l'utilisateur peut faire connaître des connexions directement à l'unité centrale. Le procédé conforme à l'invention est alors utilisé pour vérifier la validité des données ainsi entrées et procéder à une éventuelle correction.

## Revendications

1. Procédé de détection de connexions de type Péritel dans un réseau domotique caractérisé en ce qu'il comporte les étapes:
a) de désactiver les sources vidéo reliées au réseau,
b) de mettre en veille les récepteurs vidéo reliés au réseau,
c) de commander l'émission d'un signal vidéo d'une première source vidéo,
d) de détecter les récepteurs vidéo allumés,
e) de mémoriser l'existence d'une connexion entre ladite première source et lesdits récepteurs vidéo allumés,
f) de désactiver ladite première source et de remettre en veille lesdits récepteurs vidéo allumés,
g) de reprendre le procédé à partir de l'étape c avec chacune des sources restantes.

2. Procédé selon la revendication 1, caractérisé en ce qu'il est mis en oeuvre lors de l'installation d'une nouvelle source vidéo ou d'un nouveau récepteur vidéo dans le réseau.

3. Procédé selon l'une des revendications précédentes, caractérisé en ce qu'il est mis en oeuvre sur l'initiative d'un utilisateur.

4. Procédé selon l'une des revendications précédentes, caractérisé en ce que la mémorisation des connexions est utilisée pour mettre en veille des récepteurs vidéo mis en fonctionnement de façon indésirable lors de la mise en fonctionnement d'une source vidéo pour laquelle il existe de telles connexions.

5. Procédé de détection de connexions de type Péritel dans un réseau domotique caractérisé en ce qu'il comporte les étapes:
a) de désactiver les sources vidéo reliées au réseau,
b) de mettre en veille les récepteurs vidéo reliés au réseau,
c) de commander l'émission d'un signal vidéo d'un groupe de sources vidéo,
d) de détecter si aucun récepteur vidéo n'est allumé, et dans ce cas, de désactiver les sources vidéo dudit groupe et de reprendre l'étape c avec le groupe suivant de sources vidéo,
e) dans le cas où au moins un récepteur vidéo allumé est détecté, de détecter les connexions pour ce groupe de sources vidéo selon le procédé conforme à l'une des revendications précédentes, ledit groupe étant considéré comme constituant l'ensemble des sources vidéo du réseau pour l'application dudit procédé,
f) de reprendre l'étape c avec le groupe suivant de sources vidéo.

6. Procédé de détection de connexions de type Péritel dans un réseau domotique caractérisé en ce qu'il comporte les étapes:
a) de mettre en veille les récepteurs vidéo reliés au réseau,
b) de commander l'émission de signaux vidéo à partir de toutes les sources vidéo du réseau
c) de détecter si des récepteurs vidéo sont allumés,
d) dans la négative, de conclure à l'inexistence desdites connexions,
e) dans l'affirmative, de répartir les sources vidéo du réseau en au moins deux groupes, et de procéder aux étapes suivantes:
f) de mettre en veille les récepteurs vidéo reliés au réseau,
g) pour chaque groupe, de commander l'émission d'un signal vidéo à partir des sources dudit groupe,
h) de détecter si des récepteurs vidéo sont allumés,
i) dans la négative, de conclure à l'inexistence desdites connexions,
j) dans l'affirmative, de procéder à une séparation en sous-groupes desdites sources appartenant audit groupe,
k) de reprendre les étapes f à j pour chaque groupe, sous-groupe ou ensemble plus petit jusqu'à ce que les ensembles formés contiennent un nombre limite de sources vidéo.

7. Procédé selon la revendication 6, caractérisé en ce que ledit nombre limite étant strictement supérieur à 1, le procédé conforme à l'une des revendications 1 à 4 est mis en oeuvre pour identifier lesdites connexions, ledit ensemble contenant ledit nombre limite de sources vidéo étant considéré comme constituant l'ensemble des sources vidéo du réseau pour l'application dudit procédé.

8. Procédé selon la revendication 6, caractérisé en ce que ledit nombre limite étant de un, l'étape h comportant une étape de mémorisation de l'existence d'une connexion entre ladite source vidéo dudit ensemble et lesdits récepteurs vidéo allumés.

## Patentansprüche

1. Verfahren zum Auffinden von SCART-Anschlüssen in Hausnetzsystem, gekennzeichnet durch die folgenden Schritte:
a) die mit dem Netz verbundenen Videoquellen werden abgeschaltet,
b) die mit dem Netz verbundenen Videoempfänger werden in den Standby-Betrieb gesetzt,
c) es wird ein Videosignal von einer ersten Videoquelle gesendet,
d) es werden die eingeschalteten Videoempfänger ermittelt,
e) das Bestehen einer Verbindung zwischen der ersten Quelle und den eingeschalteten Videoempfängern wird gespeichert,
f) die erste Quelle wird abgeschaltet, und die eingeschalteten Videoempfänger werden in den Standby-Betrieb gesetzt,
g) der Vorgang wird ausgehend vom Schritt c) mit jeder verbleibenden Quelle wiederholt.

2. Verfahren nach Anspruch 1, dadurch gekennzeichnet, daß es bei der Installation einer neuen Videoquelle oder eines neuen Videoempfängers in dem Netz durchgeführt wird.

3. Verfahren nach einem der vorangehenden Ansprüche, dadurch gekennzeichnet, daß es aufgrund einer Initiative des Benutzers durchgeführt wird.

4. Verfahren nach einem der vorangehenden Ansprüche, dadurch gekennzeichnet, daß die Speicherung der Verbindungen dazu benutzt wird, die Videoempfänger in den Standby-Betrieb zu setzen, wenn sie in unerwünschter Weise bei der Einschaltung einer Videoquelle eingeschaltet werden, für die derartige Verbindungen bestehen.

5. Verfahren zum Auffinden von SCART-Verbindungen in einem Hausnetz, gekennzeichnet durch die folgenden Schritte:
a) die mit dem Netz verbundenen Videoquellen werden abgeschaltet,
b) die mit dem Netz verbundenen Videoempfänger werden in den Standby-Betrieb gesetzt,
c) es wird ein Videosignal von einer Gruppe von Videoquellen gesendet,
d) es wird festgestellt, ob kein Videoempfänger eingeschaltet ist, und in diesem Fall werden die Videoquellen dieser Gruppe abgeschaltet, und der Schritt c) wird mit der nächsten Gruppe von Videoquellen wiederholt,
e) in dem Fall, wo wenigstens ein eingeschalteter Videoempfänger ermittelt wird, werden die Verbindungen für diese Gruppe von Videoquellen gemäß dem Verfahren nach einem der vorangehenden Ansprüche ermittelt, wobei angenommen wird, daß die Gruppe die Anordnung von Videoquellen des Netzes für die Anwendung des Verfahrens darstellt,
f) der Schritt c) wird mit der nächsten Gruppe von Videoquellen wiederholt.

6. Verfahren zum Auffinden von SCART-Verbindungen in einem Hausnetz, gekennzeichnet durch die folgenden Schritte:
a) die mit dem Netz verbundenen Videoempfänger werden in den Standby-Betrieb gesetzt,
b) es wird die Aussendung der Videosignale von allen Videoquellen des Netzes ausgelöst,
c) es wird ermittelt, ob Videoempfänger eingeschaltet sind,
d) ist dies nicht der Fall, wird daraus geschlossen, daß keine derartigen Verbindungen bestehen,
e) wenn das der Fall ist, werden die Videoquellen des Netzes in wenigstens zwei Gruppen aufgeteilt, und es wird mit den folgenden Schritten fortgefahren:
f) die mit dem Netz verbundenen Videoempfänger werden in den Standby-Betrieb gesetzt,
g) für jede Gruppe wird die Aussendung eines Videosignals von den Quellen der Gruppe ausgelöst,
h) es wird ermittelt, ob Videoempfänger eingeschaltet sind,
i) ist dies nicht der Fall, wird daraus geschlossen, daß keine derartigen Verbindungen bestehen,
j) ist dies der Fall, wird mit einer Trennung der zu dieser Gruppe gehörenden Quellen in Untergruppen fortgefahren,
k) die Schritte f) bis j) werden für jede Gruppe, Untergruppe oder eine kleinere Einheit wiederholt, bis alle gebildeten Anordnungen eine begrenzte Zahl von Videoquellen enthalten.

7. Verfahren nach Anspruch 6, dadurch gekennzeichnet, daß die begrenzte Anzahl nennenswert größer ist als 1, daß das Verfahren gemäß einem der Ansprüche 1 bis 4 eingesetzt wird, um die genannten Verbindungen zu identifizieren, wobei angenommen wird, daß die begrenzte Anzahl an Videoquellen die Anordnung der Videoquellen des Netzes für die Anwendung des Verfahrens darstellt.

8. Verfahren nach Anspruch 6, dadurch gekennzeichnet, daß die begrenzte Anzahl gleich 1 ist und daß der Schritt h) einen Schritt zum Speichern des Bestehens einer Verbindung zwischen der Videoquelle der genannten Einheit und den eingeschalteten Videoempfängern enthält.

## Claims

1. Process for detecting connections of Scart type in a home-automation network characterized in that it comprises the steps:
a) of deactivating the video sources linked to the network,
b) of placing the video receivers linked to the network on standby,
c) of instructing the transmission of a video signal from a first video source,
d) of detecting the video receivers which are turned on,
e) of storing the existence of a connection between said first source and said turned-on video receivers,
f) of deactivating said first source and of placing said turned-on video receivers back on standby,
g) of repeating the process from step c with each of the remaining sources.

2. Process according to Claim 1, characterized in that it is implemented when installing a new video source or a new video receiver in the network.

3. Process according to one of the preceding claims, characterized in that it is implemented on the initiative of a user.

4. Process according to one of the preceding claims, characterized in that the storage of the connections is used to place on standby video receivers put into operation in an undesirable manner on putting into operation a video source for which such connections exist.

5. Process for detecting connections of Scart type in a home-automation network characterized in that it comprises the steps:
a) of deactivating the video sources linked to the network,
b) of placing the video receivers linked to the network on standby,
c) of instructing the transmission of a video signal from a group of video sources,
d) of detecting whether no video receiver is turned on, and in this case, of deactivating the video sources of said group and of repeating step c with the next group of video sources,
e) in the case in which at least one turned-on video receiver is detected, of detecting the connections for this group of video sources according to the process in accordance with one of the preceding claims, said group being regarded as constituting the set of video sources of the network for the application of said process,
f) of repeating step c with the next group of video sources.

6. Process for detecting connections of Scart type in a home-automation network characterized in that it comprises the steps:
a) of placing the video receivers linked to the network on standby,
b) of instructing the transmission of video signals from all the video sources of the network,
c) of detecting whether video receivers are turned on,
d) in the negative, of concluding the non-existence of said connections,
e) in the affirmative, of distributing the video sources of the network into at least two groups, and of carrying out the following steps:
f) of placing the video receivers linked to the network on standby,
g) for each group, of instructing the transmission of a video signal from the sources of said group,
h) of detecting whether video receivers are turned on,
i) in the negative, of concluding the non-existence of said connections,
j) in the affirmative, of carrying out a separation into subgroups of said sources belonging to said group,
k) of repeating steps f to j for each group, subgroup or smaller set until the sets formed contain a limit number of video sources.

7. Process according to Claim 6, characterized in that said limit number being strictly greater than 1, the process in accordance with one of Claims 1 to 4 is implemented so as to identify said connections, said set containing said limit number of video sources being regarded as constituting the set of video sources of the network for application of said process.

8. Process according to Claim 6, characterized in that said limit number being one, step h comprising [sic] a step of storing the existence of a connection between said video source of said set and said turned-on video receivers.
